# EUROPEAN PATENT SPECIFICATION

(11) **EP 2 965 185 B1**
(45) Date of publication and mention of the grant of the patent: **01.04.2020**
(21) Application number: 14867972.3
(22) Date of filing: 10.09.2014
(51) Int. Cl.: H04M 1/2745, H04M 1/725, G06F 3/0488, G06Q 10/10, G06F 3/0486

(54) **METHOD OF PERFORMING ONE OR MORE ACTIONS ON ELECTRONIC DEVICE**
VERFAHREN ZUR DURCHFÜHRUNG EINER ODER MEHRERER AKTIONEN AUF EINER ELEKTRONISCHEN VORRICHTUNG
PROCÉDÉ D'EXÉCUTION D'UNE OU PLUSIEURS ACTIONS SUR UN DISPOSITIF ÉLECTRONIQUE

(30) Priority: 04.12.2013 IN 5596CH2013
(43) Date of publication of application: 13.01.2016
(73) Proprietor: Huawei Technologies Co., Ltd., Longgang District Shenzhen, Guangdong 518129 (CN)
(72) Inventor: JOSHI, Pranshu, Bangalore Karnataka 560017 (IN); S, Umesh, Bangalore Karnataka 560017 (IN); NATH, Santosh Kumar, Bangalore Karnataka 560017 (IN)
(74) Representative: Pfenning, Meinig & Partner mbB
(86) International application number: PCT/CN2014/086192
(87) International publication number: WO 2015/081739

(56) References cited:
- WO-A1-2013/175770
- CN-A- 102 075 619
- CN-A- 102 799 368
- CN-A- 103 034 433
- CN-A- 103 279 257
- US-A1- 2010 122 194
- US-A1- 2013 227 483

## Description

### TECHNICAL FIELD

The present disclosure relates to the field of user interface technologies for an electronic device. In particular, the present disclosure is related to a method and an electronic device for performing one or more actions using drag-drop operation on electronic device.

### BACKGROUND

In recent years, various electronic devices with touch screen have been developed to provide a user friendly interaction of a user with the electronic device. The touch screen reduces usage of hardware buttons to be used for interacting with the electronic device. Particularly, one or more utilities or icons on the interface of the touch screen avails the user with fastest interactions. Generally, the touch screen enabled electronic devices includes, but not limited to, mobile phones, computer, tablets, notes, laptops etc. Electronic devices are commonly utilized to provide users a means to communicate and stay "connected" while moving from one place to another place. Technology of such electronic devices has advanced to the extent where data regarding any desired content is readily available. Such information exchange can occur by way of user entering information (e.g., text, visual, audio, and so on) into the display area of a user device and interacting with the device, utilizing that display area.

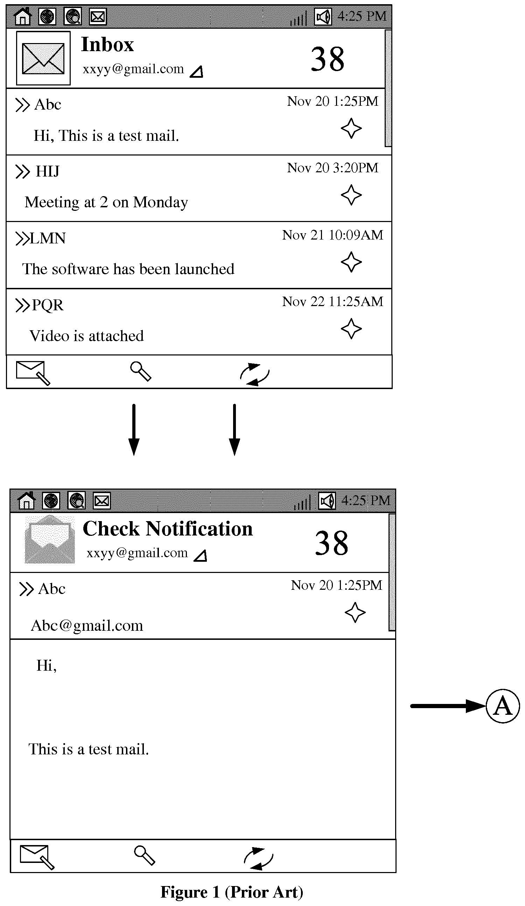

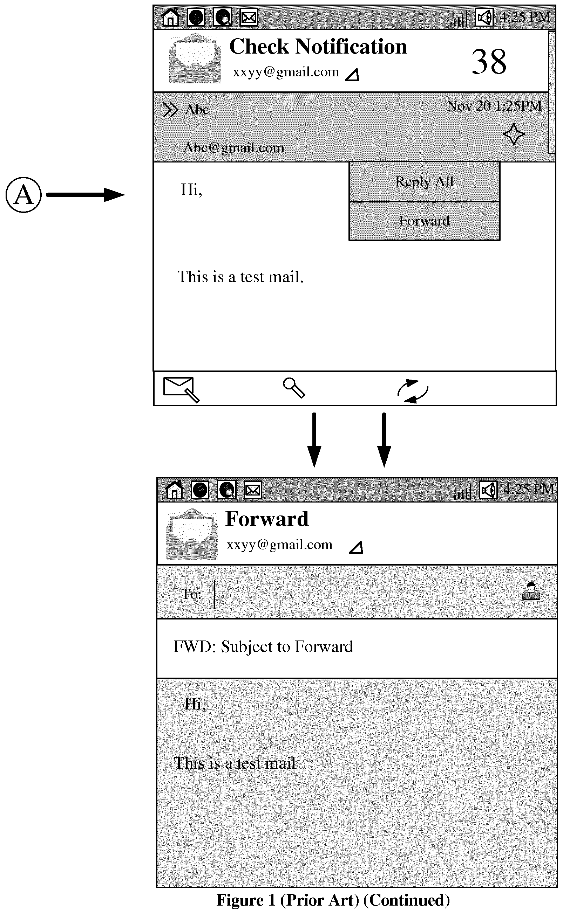

Usually, when a user attempts to navigate through various directories, applications, files or other functions, all the information that the user might need to navigate might not be displayed on the display area at the same time. This makes the user scroll or move through various display pages to achieve the desired result. Traditionally, the user has to perform minimum of at least 3 steps to achieve the desired result. Figure 1 illustrates a traditional way of performing 'forward' action in an e-mail conversation according to an embodiment of the prior art. Considering the email application where user commonly performs creating message, replying, forwarding and deleting etc. For example, for forwarding an email, firstly, the user has to click on the email to forward the content or message contained in the email. Secondly, the user clicks on open 'Menu' tab and then chooses 'options'. Thirdly, the user clicks on the 'forward' to achieve the forward action. The excess scroll or movement on the display page that is not intuitively related to hand movement causes stress on the user. In addition, performing some functions can be cumbersome and might not allow a user to quickly and easily interact with the electronic device.

Therefore, there exists a need to reduce number of steps to achieve a desired action on the electronic device. Hence, a drag-drop operation is provided to achieve the desired action with minimum of movement on the display page.

US 2001 / 0122194 A1 discloses a method and system for providing context dependent pop-up menu icons that activate menu icons in response to a select and drag operation by manipulation of a pointing device. US2013227483 A1 discloses an electronic device providing a user interface for accessing and performing quick operations on elements of contents available on electronic device.

### SUMMARY

The subject matter of the present invention is defined by the accompanying claims.

The shortcomings of the prior art are overcome and additional advantages are provided through the present disclosure. Additional features and advantages are realized through the techniques of the present disclosure. Other aspects of the disclosure are described in detail herein.

The present disclosure relates to a method of performing one or more actions on an electronic device. The method comprises selecting at least one item from one or more items displayed on a user interface of the electronic device. The at least one item is selected by touching the at least one item for a predetermined time. Then, the selected at least one item is dragged towards one of one or more context based utilities on the user interface. Each of the one or more context based utilities corresponds to a preconfigured action. Lastly, the selected at least one item is dropped on the one or more context based utilities to perform corresponding preconfigured action.

An electronic device is disclosed in the present disclosure for performing one or more actions. The electronic device comprises a user interface and a processing unit. The user interface is used to perform drag and drop operation. The processing unit is communicatively connected to the user interface, and is configured to detect selection of at least one item from one or more items displayed on the user interface of the electronic device. The at least one item is selected by touching the at least one item for a predetermined time. Then the processing unit detects dragging of the selected at least one item towards one of one or more context based utilities on the user interface. Each of the one or more context based utilities corresponds to a preconfigured action. The processing unit detects dropping of the selected at least one item on the one or more context based utilities and performs preconfigured action corresponding to the one of the one or more context based utilities.

The present disclosure relates to a non-transitory computer readable medium including operations stored thereon that when processed by at least one processing unit cause an electronic device to perform one or more actions by performing the acts of detecting selection of at least one item from one or more items displayed on the user interface of the electronic device. The at least one item is selected by touching the at least one item for a predetermined time. Then dragging of the selected at least one item towards one of one or more context based utilities on the user interface is detected. Each of the one or more context based utilities corresponds to a preconfigured action. Next, dropping of the selected at least one item on the one or more context based utilities is detected. Preconfigured action corresponding to the one of the one or more context based utilities is performed.

The present disclosure relates to a computer program for performing one or more actions on an electronic device, said computer program comprising code segment for detecting selection of at least one item from one or more items displayed on the user interface of the electronic device, wherein the at least one item is selected by touching the at least one item for a predetermined time; code segment for detecting dragging of the selected at least one item towards one of one or more context based utilities on the user interface, wherein each of the one or more context based utilities correspond to a preconfigured action; code segment for detecting dropping of the selected at least one item on the one or more context based utilities; and code segment for performing preconfigured action corresponding to the one of the one or more context based utilities.

The foregoing summary is illustrative only. In addition to the illustrative aspects and features described above, further aspects, and features will become apparent by reference to the drawings and the following detailed description.

### BRIEF DESCRIPTION OF THE DRAWINGS

The novel features and characteristic of the disclosure are set forth in the appended claims. The embodiments of the disclosure itself, however, as well as a preferred mode of use, further objectives and advantages thereof, will best be understood by reference to the following detailed description of an illustrative embodiment when read in conjunction with the accompanying drawings. One or more embodiments are now described, by way of example only, with reference to the accompanying drawings.
Figure 1 shows exemplary diagram illustrating traditional method of performing actions in electronic communication on an electronic device in accordance with an embodiment of the prior art;
Figure 2 shows exemplary block diagram illustrating an electronic device in accordance with an embodiment of the present disclosure;
Figures 3a-3c shows user interface illustrating a method of performing one or more actions in email application on an electronic device;
Figures 4a-4c shows user interface illustrating a method of performing one or more actions in contact registers on an electronic device;
Figure 5 shows an exemplary flow chart illustrating a method of performing one or more actions on an electronic device;
Figure 6 is an exemplary flow chart illustrating a method of performing one or more actions by an electronic device; and
Figure 7 is an exemplary flow chart illustrating a method of performing one or more actions by the electronic device providing a popped up box with one or more context based utilities in accordance with an embodiment of the present disclosure.

The figures depict embodiments of the disclosure and examples for understanding the invention for purposes of illustration only. One skilled in the art will readily recognize from the following description that alternatives of the structures and methods illustrated herein may be employed without departing from the principles of the disclosure described herein.

### DETAILED DESCRIPTION

The foregoing has broadly outlined the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific aspect disclosed may be readily utilized as a basis for modifying or designing other structures for carrying out the same purposes of the present disclosure. It should also be realized by those skilled in the art that such equivalent constructions do not depart from the scope of the disclosure as set forth in the appended claims. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

The present disclosure relates to user interface technologies for an electronic device. More particularly, the present disclosure provides a drag-drop operation to perform one or more actions on the user interface of the electronic device. An item is selected, dragged and dropped on to a context based utility to achieve a desired action. Typically, an item is selected when a user touches the item for a predetermined time. Then, the user drags the item towards one of one or more context based utilities which corresponds to a preconfigured action. After dragging, the item is dropped on the one of the one or more context based utilities to achieve the preconfigured action. For example, considering the email application, e-mail from the inbox is selected by a touching the mail for a predetermined time. The one or more context based utilities related to the email communications include, but does not limit to, 'reply', 'forward', 'delete', 'print', 'categorize', 'copy', 'move', 'compose' etc. Then, the selected item is dragged towards the context based utility such as 'Reply' and dropped on the 'Reply' utility as desired by a user to achieve a reply action. Another example, considering the call registers, at least one contact is selected by touching the at least one contact for a predetermined time. The one or more context based utilities related to contact registers include, but does not limit to, 'edit', 'view', 'delete', 'add', 'connect to social networks' etc. Then, the at least one contact is dragged towards 'view' utility and dropped on the 'view' utility as desired by the user to achieve viewing of the contact being selected by the user. Therefore, the drag-drop operation reduces the number of steps followed in traditional methods as illustrated in prior arts.

Henceforth, embodiments of the present disclosure are explained with the help of exemplary diagrams and one or more examples. However, such exemplary diagrams and examples are provided for the illustration purpose for better understanding of the present disclosure and should not be construed as limitation on scope of the present disclosure.

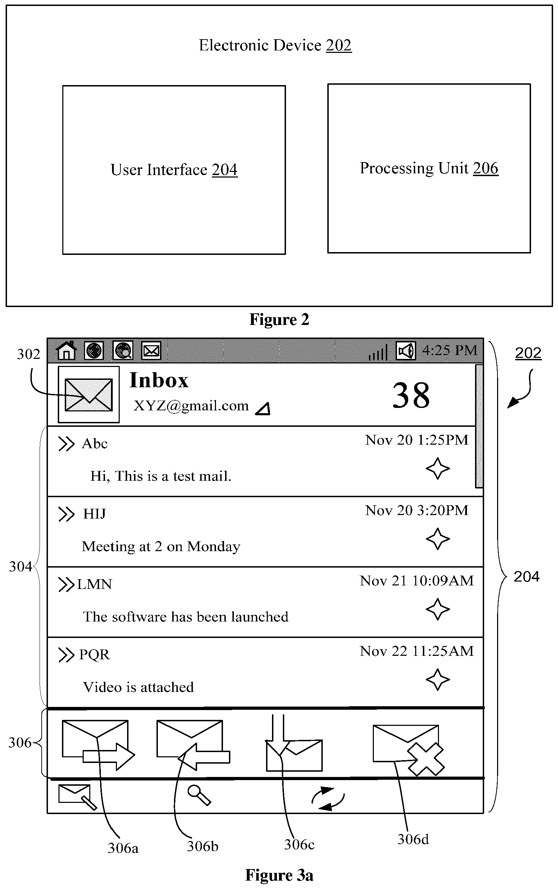

Figure 2 shows exemplary block diagram illustrating an electronic device 202 in accordance with an embodiment of the present disclosure. The electronic device 202 is a device comprising a touch screen interface. In a non-limiting example, the electronic device 202 includes, but is not limiting to, mobile phone, ATM machine, Television, Personal Digital Assistant (PDA), laptop, computer, point-of-sale terminals, car navigation systems, medical monitors, contactless device, industrial control panels, and other electronic device having touch screen panel. The electronic device 202 comprises including a user interface 204 and a processing unit 206. The user interface 204 provides a user to input instructions using input device (not shown in figure 2) including, but not limiting to, stylus, finger, pen shaped pointing device, and any other device that can be used to provide input through the user interface204. In an embodiment, the user interface 204 is a touch screen. In an embodiment, the user interface 204 is configured to perform drag-drop operation to achieve one or more actions. In an embodiment, the user interface 204 is communicatively connected to the processing unit 206 through a communication interface. In an embodiment, the information with respect to drag-drop operation can be communicated to the processing unit 206 from a machine-readable medium. The term machine-readable medium can be defined as a medium providing data to a machine to enable the machine to perform a specific function. The machine-readable medium can be a storage media. The storage media can be the storage unit. All such media must be tangible/non transitory to enable the instructions carried by the media to be detected by a physical mechanism that reads the instructions into the machine.

The processing unit 206 detects selection of an item, dragging and dropping of the item on the one or more contexts based utilities and perform one or more actions related to the corresponding one or more context based utilities. Particularly, the processing unit 206 detects selection of at least one item from one or more items displayed on the user interface 204 of the electronic device 202. In an embodiment, the one or more items includes, but does not limit to, electronic mails (e-mails), short message services (SMSs), messages, images, audios, videos, and electronic documents. The at least one item is selected by touching the at least one item for a predetermined time. In a non-limiting embodiment, the predetermined time is in the range of about 1 millisecond to about 30 milliseconds. For example, an email from inbox comprising received emails is selected when the user touches the email for about 20 milliseconds. The processing unit 206 detects dragging of the selected at least one item towards one of one or more context based utilities on the user interface 204. The one or more context based utilities are the icons which are logically related to the actions. For example, in email communications, when an email is selected the one or more utilities corresponding to the emails are displayed 'reply to email', 'forward the email', and 'delete the email' etc. In an embodiment, the one or more context based utilities pops up based on type of the at least one item being selected. In an embodiment, the one or more context based utilities are displayed adjacent to the at least one item being selected. For example, the one or more context based utilities are displayed below the emails and next to the email after the email is being selected. Each of the one or more context based utilities corresponds to a preconfigured action including, but not limiting to, replying, deleting, forwarding, editing, composing, adding, calling, viewing and other related actions capable of being performed on the electronic device 202. For example, when the user wishes to reply to an email, the user selects the email, drags the email to the utility 'reply' to achieve the reply action. Upon detecting the dragging of the at least one item, the processing unit 206 detects dropping of the selected at least one item on the one or more context based utilities to achieve the preconfigured action corresponding to the one or more context based utilities. The preconfigured action is initiated by the processing unit upon determining the dragging and dropping of the selected at least one item on the one or more context based utilities. For example, the reply action is achievable when the user drops the selected email on the 'reply' icon or utility.

In embodiment, the drag-drop operation comprising selection of the at least one item, dragging and dropping of the selected at least one item is performed without lifting the input device over the user interface 204. In the present disclosure only limited events or applications are listed out for the purposes of the demonstration only. This should not be construed as limitation on this part.

Figure 3a illustrates an exemplary email application on the electronic device 202 comprising various context based utilities corresponding to the email application. Considering the email application, where the user logs in to an email account and clicks on the inbox to display one or more emails received. In the illustrated figure 3a, the user interface 204 of the electronic device 202 displays the various emails received in the 'inbox' section depicted by numeral 302 using the email account "XYZ@gmail.com". The inbox displays the one or more received emails depicted by numeral 304. For example, the emails are received from 'Abc', 'HIJ', 'LMN' and 'PQR' and so on illustrated by numeral 304. Each of the emails comprises some content. For example, email received from 'Abc' comprises content stated as "Hi, This is a test mail". Based on the email application, the one or more context based utilities depicted by numeral 306 are displayed below the emails. That is, the 'forward' utility is depicted by 306a, 'reply' utility without email history (chain of emails) is depicted by 306b, 'reply' with email history is depicted by 306c and 'delete' utility is depicted by 306d.

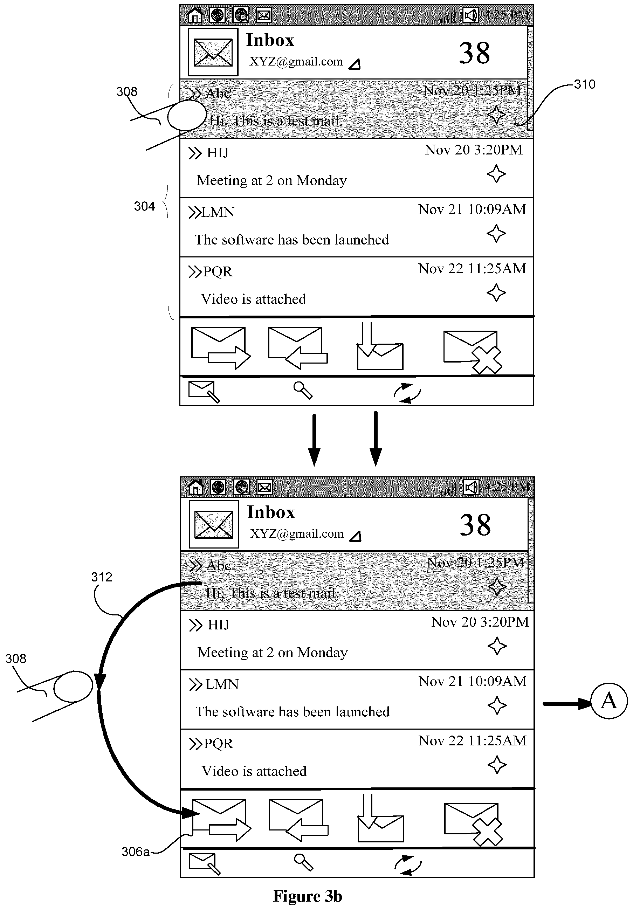

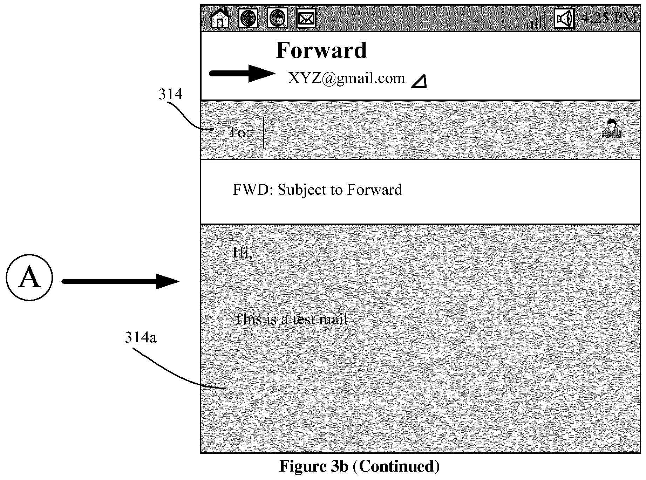

Figures 3b shows user interface 204 illustrating method of performing one or more actions such as forwarding the mails in email application on the electronic device 202 using drag-drop operation. Consider the one or more emails received in the inbox section of the user's account. To perform drag-drop operation, the user selects the email depicted by numeral 310. The user selects the email 310 among the one or more received emails 304 by touching the email 310 for around 10-30 milliseconds on the user interface 206 using finger 308. The user drags the email 310, where dragging of the email 310 by the user using the finger 308 is depicted by numeral 312. The user drops the email 310 down on the 'forward' utility 306a to achieve the action of forwarding the email. After dropping of the email 310 on the 'forward' utility 306a is performed, the forward dialogue box appears on the user interface 204 where the user is asked to enter the email id or name of the person to whom the user wishes to forward the email 310 along with the content depicted by numeral 314a.

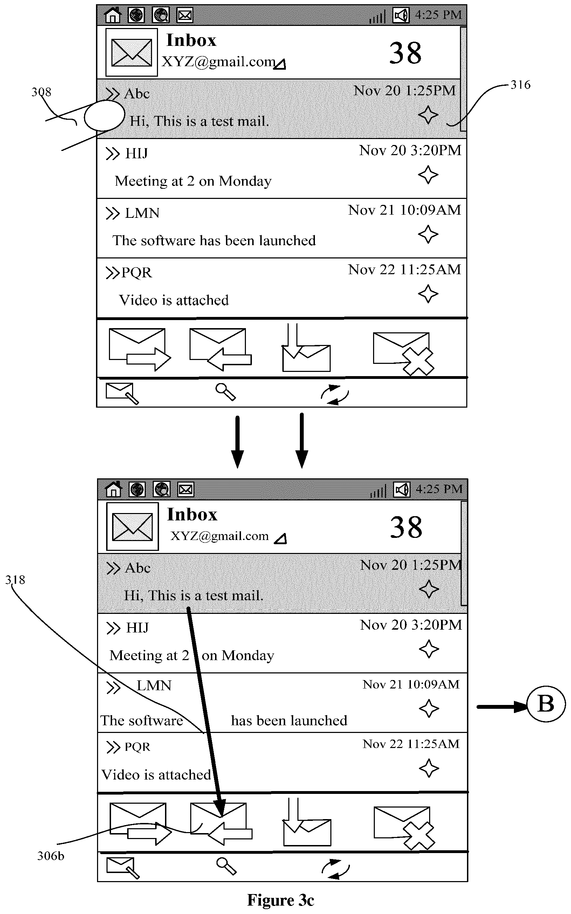

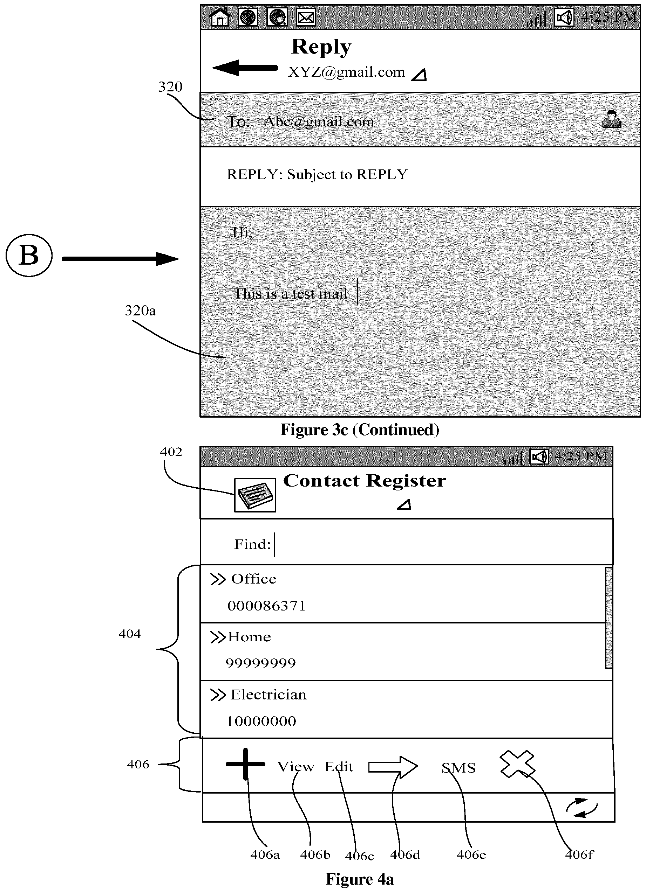

Figures 3c shows user interface 204 illustrating method of performing one or more actions such as replying mails in email application on the electronic device 202 using drag-drop operation. Considering the one or more emails received in the inbox section of the user's account. To perform drag-drop operation, the user selects the email depicted by numeral 316. The user selects the email 316 among the one or more received emails 304 by touching the email 316 for around 1-30 milliseconds on the user interface 204 using finger 308. The user drags the email 316, where dragging of the email 316 by the user using the finger 308 is depicted by numeral 318. The user drops the email 316 on the 'reply' utility 306b to achieve the action of replying to the email 316. After dropping of the email 316 on the 'reply' utility 306b is performed, the reply dialogue box appears on the user interface 204 where the user is asked to enter the text in text field 320a. The email id of the person is retained in "To" field when the user is replying. That is, the email 316 received from the person having the email id "Abc@gmail.com" is retained in "To" as depicted by numeral 320 when the user is performing reply action.

Similarly, various other actions such as including, but not limiting to deleting, composing, and editing the email is achieved by performing the drag-drop operation on the corresponding context based utility.

Figure 4a shows user interface 204 illustrating method of performing one or more actions in contact registers on the electronic device 202 using drag-drop operation. Considering the contact register depicted by numeral 402 which appears on the user interface 204 when the user clicks the contact registers on the electronic device 202. The contact registers contains the information of the contacts such as including, but not limiting to, phone number, email id, picture and name. In the illustrated figure 4a, the contact registers 402 contains the name and phone number of the contacts depicted by numeral 404. One or more context based utilities depicted by 406 related to the contact registers 402 appears on the user interface 206. That is, add utility 406a to add the contact, view utility 406b to view the contact information, edit utility 406c to edit the contact information, forward utility 406d to forward the contact information, SMS utility 406e to send sms to the contact and delete utility 406f to delete the contact are displayed.

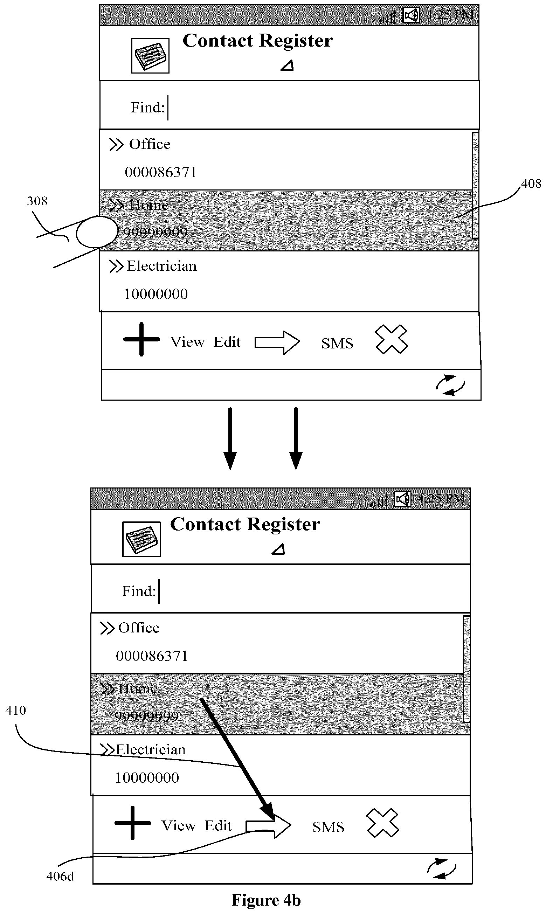

Figures 4b shows user interface 204 illustrating method of performing one or more actions such as forwarding the contact information in contact registers 402 on the electronic device 202 using drag-drop operation. Considering the contact register 402 containing the one or more contacts along with their contact information such as name and the phone number as depicted by numeral 404. To perform drag-drop operation, the user selects the contact depicted by numeral 408. The user selects the contact 408 among the one or more contacts 404 by touching the contact 408 for around 1-30 milliseconds on the user interface 206 using finger 308. The user drags the contact 408, where dragging of the contact 408 by the user using the finger 308 is depicted by numeral 410. The user drops the contact 408 down on the forward utility 406d to achieve the action of forwarding the contact 408. After dropping of the contact 408 on the forward utility 406d is performed, the contact 408 is forwarded by the user as desired by the user.

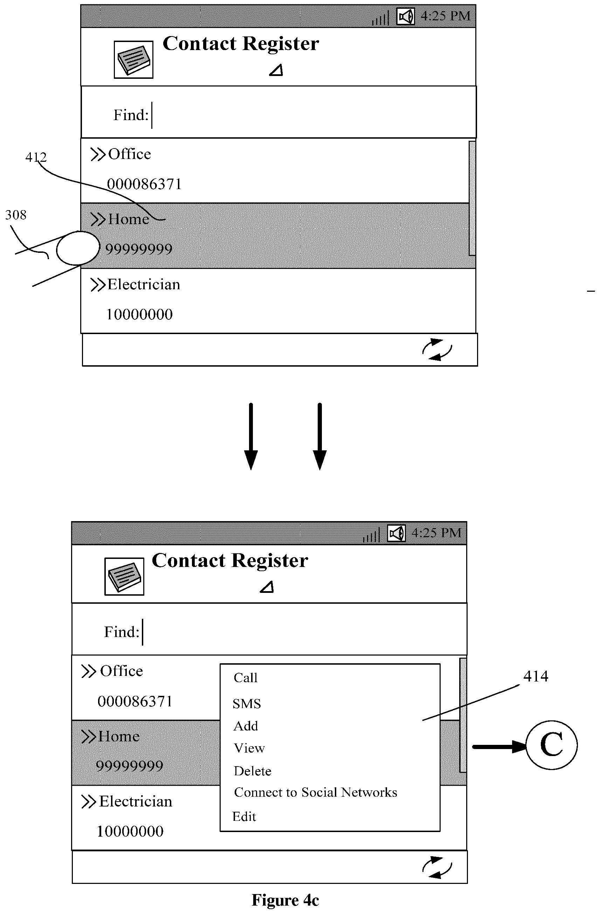

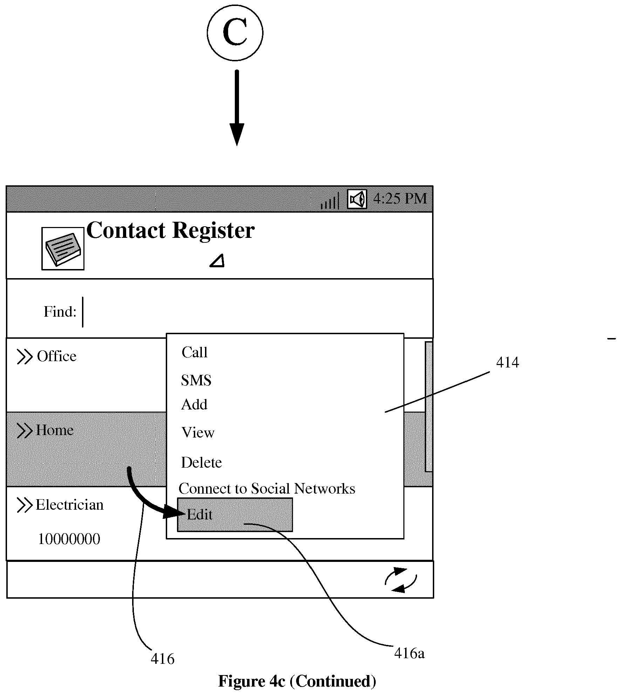

Figures 4c shows user interface 204 illustrating method of performing one or more actions such as editing the contact information in contact registers 402 on the electronic device 202 using drag-drop operation. Considering the contact register 402 containing the one or more contacts along with their contact information such as name and the phone number as depicted by numeral 404. To perform drag-drop operation, the user selects the contact depicted by numeral 412. The user selects the contact 410 among the one or more contacts 404 by touching the contact 410 for around 1-30 milliseconds on the user interface 204 using finger 308. In the illustrated figure 4c, the one or more context based utilities related to the contact register 402 pops up when the user touches the contact in the contact register 402 for a predetermined time, for example, around 30 milliseconds. The one or more context based utilities which is popped up is depicted by numeral 414. The popped up box includes options including, but not limiting to, call, SMS, add, view, delete, connect to social networks and edit. In an example, the user invites the contact person present in the contact register to various social network by choosing connect to social networks utility. The user drags the contact 410, where dragging of the contact 410 by the user using the finger 308 is depicted by numeral 416. The user drops the contact 410 on the edit utility 416a to achieve the action of editing the contact 410. After dropping of the contact 410 on the edit utility 416a is achieved, the contact 410 is edited by the user as desired by the user.

Similarly, various other actions such as including, but not limiting to deleting, adding, viewing and connect to the social network are achieved by performing the drag-drop operation on the corresponding context based utility. A person skilled in art would understand that the utilities are dynamically provided on the user interface 204 based on the at least one item being selected on the user interface 204. For example, when user selects the audio clip, the utilities corresponding to audio clips such as 'play', 'stop', 'pause', 'delete', 'forward' etc. are provided or displayed on the user interface 204.

In an example, the user can connect to the various social networks and electronic applications to receive and transmit the one or more items including, but not limiting to, electronic mails (e-mails), short message services (SMSs), messages, images, audios, videos, and electronic documents.

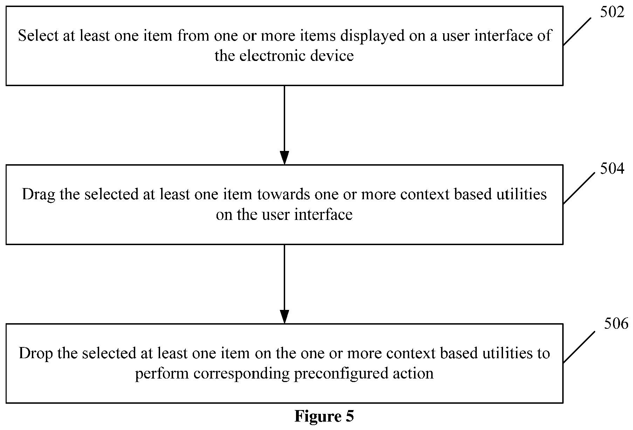

Figure 5 shows an exemplary flow chart illustrating a method of performing one or more actions on the electronic device 202 using a drag-drop operation in accordance with an embodiment of the present disclosure. At step 502, at least one item is selected from the one or more items displayed on the user interface 204 of the electronic device 202. The at least one item is selected by touching the at least one item for the predetermined time. Selection of the at least one item is detected by the processing unit 206 configured in the electronic device 202. At step 504, the selected at least one item is dragged towards one of one or more context based utilities on the user interface 204. Each of the one or more context based utilities corresponds to the preconfigured action. At step 506, the selected at least one item is dropped on the one or more context based utilities to perform corresponding preconfigured action. The preconfigured action is initiated by the processing unit 206 upon determining the dragging and dropping of the selected at least one item on the one or more context based utilities.

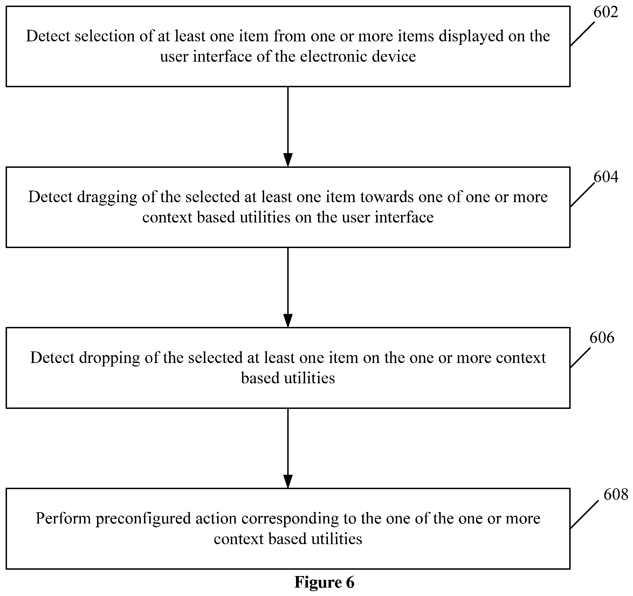

Figure 6 is an exemplary flow chart illustrating a method of performing one or more actions by the electronic device 202. At step 602, the processing unit 208 detects selection of at least one item from one or more items displayed on the user interface 204 of the electronic device 202. The at least one item is selected by touching the at least one item for the predetermined time. Then at step 604, the processing unit 206 detects dragging of the selected at least one item towards one of one or more context based utilities on the user interface 204. Each of the one or more context based utilities corresponds to the preconfigured action. At step 606, the processing unit 206 detects dropping of the selected at least one item on the one or more context based utilities. At step 608, the processing unit 206 performs the preconfigured action corresponding to the one of the one or more context based utilities. The preconfigured action is initiated upon determining the dragging and dropping of the selected at least one item on the one or more context based utilities.

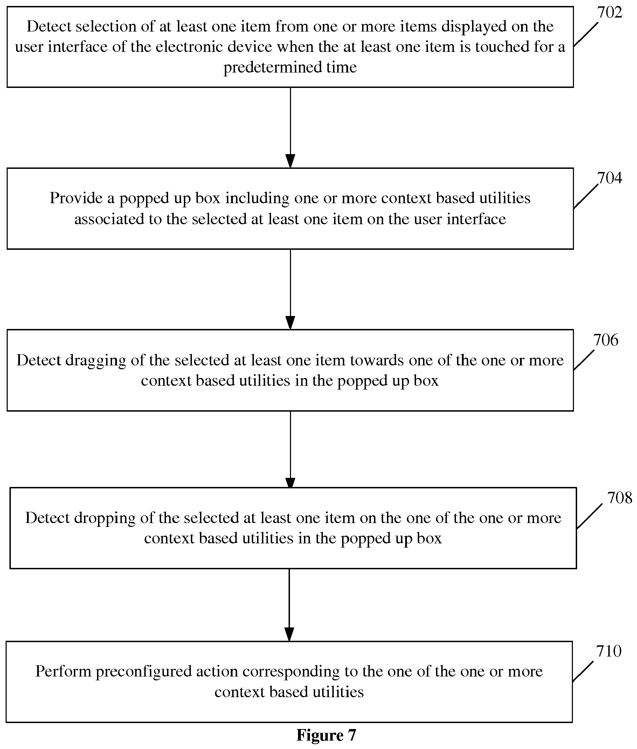

Figure 7 is an exemplary flow chart illustrating a method of performing one or more actions by the electronic device 202 providing a popped up box with one or more context based utilities in accordance with an embodiment of the present disclosure. At step 702, the processing unit 208 of the electronic device 202 detects selection of at least one item from one or more items displayed on the user interface 204 of the electronic device 202 when the at least one item is touched for a predetermined time. Then, after the at least one item is touched for the predetermined time, a popped up box including the one or more context based utilities associated to the selected at least one item is provided on the user interface 204 as illustrated at step 704. At step 706, the processing unit 206 detects dragging of the selected at least one item towards one of one or more context based utilities in the popped up box. Each of the one or more context based utilities corresponds to the preconfigured action. At step 708, the processing unit 206 detects dropping of the selected at least one item on the one or more context based utilities in the popped up box. At step 710, the processing unit 206 performs the preconfigured action corresponding to the one of the one or more context based utilities. The preconfigured action is initiated upon determining the dragging and dropping of the selected at least one item on the one or more context based utilities.

Additionally, advantages of present disclosure are illustrated herein.

Embodiment of the present disclosure minimizes number of touches on the user interface to perform a desired action on the electronic device with drag-drop operation.

Embodiment of the present disclosure reduces traversing multiple pages and facilitates to perform the one or more actions on same screen, thus reducing process overhead.

Embodiment of the present disclosure reduces number of steps to achieve a desired action on the electronic device i.e. with minimum of movement on the display page. Thus, the present disclosure reduces finger movement to random touch point and thus saving considerable amount of time.

Embodiment of the present disclosure reduces excess scroll or movement on the display page to reduce hand movement and thus reduces stress on the user.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processing unit may read and execute the code from the computer readable medium. The processing unit is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. We suggest further stating in the specification that non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.). Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. On the contrary a variety of optional components are described to illustrate the wide variety of possible embodiments.

Further, although process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of figures 6 and 7 show certain events occurring in a certain order. In alternatives, certain operations may be performed in a different order, modified or removed. Moreover, steps may be added to the above described logic. Further, operations described herein may occur sequentially or certain operations may be processed in parallel. Yet further, operations may be performed by a single processing unit or by distributed processing units.

The foregoing description of various embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto. The above specification, examples and data provide a complete description of the manufacture and use of the composition of the invention. Since many embodiments of the invention can be made without departing from the scope of the invention, the invention resides in the claims hereinafter appended.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

In addition, where features or aspects of the disclosure are described in terms of Markush groups, those skilled in the art will recognize that the disclosure is also thereby described in terms of any individual member or subgroup of members of the Markush group.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of performing one or more actions on an electronic device (202) comprising a touch screen panel, said method comprising:
selecting at least one item from one or more items displayed on a user interface (204) of the electronic device (202), wherein the at least one item is selected by touching the at least one item for a predetermined time (Step 502) in the range of about 1 millisecond to about 30 milliseconds, wherein selecting of the at least one item is detected by a processing unit (206) configured in the electronic device (202);
providing a popped-up box (704) including one or more context based utilities associated to the selected at least one item on the user interface, wherein the context based utilities are based on a type of the selected at least one item and wherein the one or more context based utilities is displayed adjacent to the at least one item being selected and wherein the one or more context based utilities pops up when the user touches said one or more items for said predetermined time;
dragging (706) the selected at least one item towards one of one or more context based utilities in the popped-up box, wherein each of the one or more context based utilities correspond to a preconfigured action, wherein the preconfigured action corresponding to each of the context based utilities is selected from at least one of replying, deleting, forwarding, editing, composing, adding, calling, viewing and other related actions capable of being performed on the electronic device; and
dropping the selected at least one item on the one or more context based utilities to perform corresponding preconfigured action, wherein the preconfigured action is initiated by the processing unit (206) upon determining the dragging (706) and dropping (708) of the selected at least one item on the one or more context based utilities wherein the one or more items are selected from a group comprising electronic mails, e-mails, (304) and short message services, SMS.

2. The method as claimed in claim 1, wherein the electronic device (202) is a device comprising touch screen interface selected from at least one of mobile phone, ATM machine, Television, Personal Digital Assistant, PDA, laptop, computer, point-of-sale terminals, car navigation systems, medical monitors, contactless device, industrial control panels.

3. A electronic device (202) for performing one or more actions, said electronic device (202) comprising:
a user interface (204) comprising a touch screen panel to perform drag and drop operation; and
a processing unit (206), communicatively connected to the user interface, and configured to:
detect selection of at least one item from one or more items displayed on the user interface of the electronic device, wherein the at least one item is selected by touching the at least one item for a predetermined time (Step 702) in the range of about 1 millisecond to about 30 milliseconds;
provide a popped-up box including one or more context based utilities associated to the selected at least one item on the user interface (Step 704), wherein the context based utilities are based on a type of the selected at least one item, wherein the user interface (204) displays the one or more context based utilities adjacent to the at least one item being selected and wherein the one or more context based utilities pops up when the user touches said one or more items for said predetermined time;
detect dragging of the selected at least one item towards one of one or more context based utilities in the popped-up box, wherein each of the one or more context based utilities correspond to a preconfigured action (Step 706); and
detect dropping of the selected at least one item on the one or more context based utilities (Step 708); and
perform preconfigured action corresponding to the one of the one or more context based utilities (Step 710),
wherein the one or more items are selected from a group comprising electronic mails, e-mails, (304) and short message services, SMS.

4. The electronic device (202) as claimed in claims 3, wherein the electronic device (202) is a device comprising touch screen selected from at least one of mobile phone, ATM machine, Television, Personal Digital Assistant, PDA, laptop, computer, point-of-sale terminals, car navigation systems, medical monitors, contactless device, industrial control panels.

5. A non-transitory computer readable medium including operations stored thereon that when processed by at least one processing unit (206) cause an electronic device (202) comprising a touch screen panel to perform one or more actions by performing the acts of:
detecting selection of at least one item from one or more items displayed on the user interface of the electronic device (Step 702), wherein the at least one item is selected by touching the at least one item for a predetermined time in the range of about 1 millisecond to about 30 milliseconds;
providing a popped-up box including one or more context based utilities associated to the selected at least one item on the user interface, wherein the context based utilities are based on a type of the selected at least one item (Step 704), wherein the user interface (204) displays the one or more context based utilities adjacent to the at least one item being selected and wherein the one or more context based utilities pops up when the user touches said one or more items for said predetermined time;
detecting dragging of the selected at least one item towards one of one or more context based utilities in the popped-up box, wherein each of the one or more context based utilities correspond to a preconfigured action (Step 706); and
detecting dropping of the selected at least one item on the one or more context based utilities (Step 708); and
performing preconfigured action corresponding to the one of the one or more context based utilities (Step 710),
wherein the one or more items are selected from a group comprising electronic mails, e-mails, (304) and short message services, SMS.

## Patentansprüche

1. Verfahren zur Durchführung einer oder mehrerer Aktionen auf einer elektronischen Vorrichtung (202), die ein Berührungsbildschirmfeld umfasst, wobei das Verfahren Folgendes umfasst:
Auswählen von zumindest einem Element aus einem oder mehreren Elementen, die auf einer Benutzerschnittstelle (204) der elektronischen Vorrichtung (202) angezeigt werden, wobei das zumindest eine Element ausgewählt wird, indem das zumindest eine Element über eine zuvor festgelegte Zeit in dem Bereich von etwa 1 Millisekunde bis etwa 30 Millisekunden berührt wird (Schritt 502), wobei das Auswählen des zumindest einen Elements durch eine Verarbeitungseinheit (206) erfasst wird, die in der elektronischen Vorrichtung (202) konfiguriert ist;
Bereitstellen eines erschienenen Feldes (704), das eine oder mehrere kontextbasierte Programme in Verbindung mit dem ausgewählten zumindest einen Element auf der Benutzerschnittstelle beinhaltet, wobei die kontextbasierten Programme auf einer Art des ausgewählten zumindest einen Elements basieren und wobei das eine oder die mehreren kontextbasierten Programme benachbart zu dem zumindest einem Element, das ausgewählt ist, angezeigt werden, und wobei das eine oder die mehreren kontextbasierten Programme erscheinen, wenn der Benutzer das eine oder die mehreren Elemente über die zuvor festgelegte Zeit berührt;
Ziehen (706) des ausgewählten zumindest einen Elements in Richtung eines von einem oder mehreren kontextbasierten Programmen in dem erschienenen Feld, wobei jedes von dem einen oder den mehreren kontextbasierten Programmen einer vorkonfigurierten Aktion entspricht, wobei die vorkonfigurierte Aktion, die jedem der kontextbasierten Programme entspricht, aus zumindest einem von Antworten, Löschen, Weiterleiten, Bearbeiten, Verfassen, Hinzufügen, Anrufen, Ansehen und anderen verwandten Aktionen ausgewählt ist, die auf der elektronischen Vorrichtung durchgeführt werden können; und
Ablegen des ausgewählten zumindest einen Elements bei dem einen oder den mehreren kontextbasierten Programmen, um eine entsprechende vorkonfigurierte Aktion durchzuführen, wobei die vorkonfigurierte Aktion beim Bestimmen des Ziehens (706) und Ablegens (708) des ausgewählten zumindest einen Elements bei dem einen oder den mehreren kontextbasierten Programmen durch die Verarbeitungseinheit (206) initiiert wird, wobei das eine oder die mehreren Elemente aus einer Gruppe ausgewählt sind, die elektronische Mails, E-Mails (304) und Kurznachrichtendienste, SMS, umfasst.

2. Verfahren nach Anspruch 1, wobei die elektronische Vorrichtung (202) eine Vorrichtung ist, die eine Berührungsbildschirmschnittstelle umfasst, die aus zumindest einem von Mobiltelefon, Geldautomat, Fernseher, persönlichem digitalen Assistenten, PDA, Laptop, Computer, Registrierkassen, Autonavigationssystemen, medizinischen Monitoren, kontaktloser Vorrichtung, industriellen Steuerpulten ausgewählt ist.

3. Elektronische Vorrichtung (202) zur Durchführung einer oder mehrerer Aktionen, wobei die elektronische Vorrichtung (202) Folgendes umfasst:
eine Benutzerschnittstelle (204), die ein Berührungsbildschirmfeld umfasst, um einen Zieh-und-Ablegevorgang durchzuführen; und
eine Verarbeitungseinheit (206), die kommunikativ mit der Benutzerschnittstelle verbunden und für Folgendes konfiguriert ist:
Erfassen der Auswahl von zumindest einem Element aus einem oder mehreren Elementen, die auf der Benutzerschnittstelle der elektronischen Vorrichtung angezeigt werden, wobei das zumindest eine Element ausgewählt wird, indem das zumindest eine Element über eine zuvor festgelegte Zeit in dem Bereich von etwa 1 Millisekunde bis etwa 30 Millisekunden berührt wird (Schritt 702);
Bereitstellen eines erschienenen Feldes, das ein oder mehrere kontextbasierte Programme in Verbindung mit dem ausgewählten zumindest einen Element auf der Benutzerschnittstelle beinhaltet (Schritt 704), wobei die kontextbasierten Programme auf einer Art des ausgewählten zumindest einen Elements basieren, wobei die Benutzerschnittstelle (204) das eine oder die mehreren kontextbasierten Programme benachbart zu dem zumindest einen Element anzeigt, das ausgewählt ist, und wobei das eine oder die mehreren kontextbasierten Programme erscheinen, wenn der Benutzer das eine oder die mehreren Elemente über die zuvor festgelegte Zeit berührt;
Erfassen des Ziehens des ausgewählten zumindest einen Elements in Richtung eines von einem oder mehreren kontextbasierten Programmen in dem erschienenen Feld, wobei jedes von dem einen oder den mehreren kontextbasierten Programmen einer vorkonfigurierten Aktion entspricht (Schritt 706); und
Erfassen des Ablegens des ausgewählten zumindest einen Elements bei dem einen oder den mehreren kontextbasierten Programmen (Schritt (708); und
Durchführen einer vorkonfigurierten Aktion entsprechend dem einen von dem einen oder den mehreren kontextbasierten Programmen (Schritt 710),
wobei das eine oder die mehreren Elemente aus einer Gruppe ausgewählt sind, die elektronische Mails, E-Mails (304) und Kurznachrichtendienste, SMS, umfasst.

4. Elektronische Vorrichtung (202) nach Anspruch 3, wobei die elektronische Vorrichtung (202) eine Vorrichtung ist, die einen Berührungsbildschirm umfasst, der aus zumindest einem von Mobiltelefon, Geldautomat, Fernseher, persönlichem digitalen Assistenten, PDA, Laptop, Computer, Registrierkassen, Autonavigationssystemen, medizinischen Monitoren, kontaktloser Vorrichtung, industriellen Steuerpulten ausgewählt ist.

5. Nichtflüchtiges computerlesbares Medium, beinhaltend darauf gespeicherte Vorgänge, die, wenn sie durch zumindest eine Verarbeitungseinheit (206) verarbeitet werden, eine elektronische Vorrichtung (202), die ein Berührungsbildschirmfeld umfasst, dazu veranlassen, eine oder mehrere Aktionen durchzuführen, indem die folgenden Handlungen durchgeführt werden:
Erfassen der Auswahl von zumindest einem Element aus einem oder mehreren Elementen, die auf der Benutzerschnittstelle der elektronischen Vorrichtung angezeigt werden (Schritt 702), wobei das zumindest eine Element ausgewählt wird, indem das zumindest eine Element über eine zuvor festgelegte Zeit in dem Bereich von etwa 1 Millisekunde bis etwa 30 Millisekunden berührt wird;
Bereitstellen eines erschienenen Feldes, das ein oder mehrere kontextbasierte Programme in Verbindung mit dem ausgewählten zumindest einen Element auf der Benutzerschnittstelle beinhaltet, wobei die kontextbasierten Programme auf einer Art des ausgewählten zumindest einen Elements basieren (Schritt 704), wobei die Benutzerschnittstelle (204) das eine oder die mehreren kontextbasierten Programme benachbart zu dem zumindest einen Element anzeigt, das ausgewählt ist, und wobei das eine oder die mehreren kontextbasierten Programme erscheinen, wenn der Benutzer das eine oder die mehreren Elemente über die zuvor festgelegte Zeit berührt;
Erfassen des Ziehens des ausgewählten zumindest einen Elements in Richtung eines von einem oder mehreren kontextbasierten Programmen in dem erschienenen Feld, wobei jedes von dem einen oder den mehreren kontextbasierten Programmen einer vorkonfigurierten Aktion entspricht (Schritt 706); und
Erfassen des Ablegens des ausgewählten zumindest einen Elements bei dem einen oder den mehreren kontextbasierten Programmen (Schritt (708); und
Durchführen einer vorkonfigurierten Aktion entsprechend dem einen von dem einen oder den mehreren kontextbasierten Programmen (Schritt 710),
wobei das eine oder die mehreren Elemente aus einer Gruppe ausgewählt sind, die elektronische Mails, E-Mails (304) und Kurznachrichtendienste, SMS, umfasst.

## Revendications

1. Procédé d'exécution d'une ou de plusieurs actions sur un dispositif électronique (202) comprenant un panneau d'écran tactile, ledit procédé comprenant :
la sélection d'au moins un élément parmi un ou plusieurs éléments affichés sur une interface utilisateur (204) du dispositif électronique (202), dans lequel l'au moins un élément est sélectionné en touchant l'au moins un élément pendant un temps prédéterminé (Étape 502) dans la plage d'environ 1 milliseconde à environ 30 millisecondes, dans lequel la sélection de l'au moins un élément est détectée par une unité de traitement (206) configurée dans le dispositif électronique (202) ;
la fourniture d'une boîte contextuelle (704) incluant un ou plusieurs utilitaires basés sur le contexte associés à l'au moins un élément sélectionné sur l'interface utilisateur, dans lequel les utilitaires basés sur le contexte sont basés sur un type de l'au moins un élément sélectionné et dans lequel les un ou plusieurs utilitaires basés sur le contexte sont affichés adjacents à l'au moins un élément sélectionné et dans lequel les uns ou plusieurs utilitaires basés sur le contexte apparaissent lorsque l'utilisateur touche lesdits un ou plusieurs éléments pendant ledit temps prédéterminé ;
le glisser (706) de l'au moins un élément sélectionné vers un ou plusieurs utilitaires basés sur le contexte dans la boîte contextuelle, dans lequel chacun des un ou plusieurs utilitaires basés sur le contexte correspond à une action préconfigurée, dans lequel l'action préconfigurée correspondant à chacun des utilitaires basés sur le contexte est sélectionnée parmi au moins une action parmi une réponse, une suppression, un transfert, une édition, une composition, un ajout, un appel, une visualisation et d'autres actions connexes pouvant être exécutées sur le dispositif électronique ; et
le déposer de l'au moins un élément sélectionné sur les un ou plusieurs utilitaires basés sur le contexte pour exécuter une action préconfigurée correspondante, dans lequel l'action préconfigurée est déclenchée par l'unité de traitement (206) lors de la détermination du glisser (706) et déposer (708) de l'au moins un élément sélectionné sur les un ou plusieurs utilitaires basés sur le contexte, dans lequel les un ou plusieurs éléments sont sélectionnés parmi un groupe comprenant des courriers électroniques, e-mails, (304) et des services de minimessages, SMS.

2. Procédé selon la revendication 1, dans lequel le dispositif électronique (202) est un dispositif comprenant une interface d'écran tactile sélectionné parmi au moins un dispositif parmi un téléphone mobile, une machine DAB, un téléviseur, un assistant électronique de poche, PDA, un ordinateur portable, un ordinateur, des terminaux de points de vente, des systèmes de navigation de véhicules, des moniteurs médicaux, un dispositif sans contact, des panneaux de commande industriels.

3. Dispositif électronique (202) pour exécuter une ou plusieurs actions, ledit dispositif électronique (202) comprenant :
une interface utilisateur (204) comprenant un panneau d'écran tactile pour exécuter une opération de glisser-déposer ; et
une unité de traitement (206), connectée de manière communicative à l'interface utilisateur, et configurée pour :
détecter une sélection d'au moins un élément parmi un ou plusieurs éléments affichés sur l'interface utilisateur du dispositif électronique, dans lequel l'au moins un élément est sélectionné en touchant l'au moins un élément pendant un temps prédéterminé (Étape 702) dans la plage d'environ 1 milliseconde à environ 30 millisecondes ;
fournir une boîte contextuelle incluant un ou plusieurs utilitaires basés sur le contexte associés à l'au moins un élément sélectionné sur l'interface utilisateur (Étape 704), dans lequel les utilitaires basés sur le contexte sont basés sur un type de l'au moins un élément sélectionné, dans lequel l'interface utilisateur (204) affiche les un ou plusieurs utilitaires basés sur le contexte adjacents à l'au moins un élément sélectionné et dans lequel les un ou plusieurs utilitaires basés sur le contexte apparaissent lorsque l'utilisateur touche lesdits un ou plusieurs éléments pendant ledit temps prédéterminé ;
détecter le glisser de l'au moins un élément sélectionné vers un utilitaire parmi les un ou plusieurs utilitaires basés sur le contexte dans la boîte contextuelle, dans lequel chacun des un ou plusieurs utilitaires basés sur le contexte correspond à une action préconfigurée (Étape 706) ; et
détecter le déposer de l'au moins un élément sélectionné sur les un ou plusieurs utilitaires basés sur le contexte (Étape 708) ; et
exécuter une action préconfigurée correspondant audit utilitaire parmi les un ou plusieurs utilitaires basés sur le contexte (Étape 710),
dans lequel les un ou plusieurs éléments sont sélectionnés parmi un groupe comprenant des courriers électroniques, e-mails, (304) et des services de minimessages, SMS.

4. Dispositif électronique (202) selon la revendication 3, dans lequel le dispositif électronique (202) est un dispositif comprenant un écran tactile sélectionné parmi au moins un dispositif parmi un téléphone mobile, une machine DAB, un téléviseur, un assistant électronique de poche, un ordinateur portable, un ordinateur, des terminaux de points de vente, des systèmes de navigation de véhicules, des moniteurs médicaux, un dispositif sans contact, des panneaux de commande industriels.

5. Support non transitoire lisible par ordinateur sur lequel sont stockées des opérations qui, lorsqu'elles sont traitées par au moins une unité de traitement (206), amènent un dispositif électronique (202) comprenant un panneau d'écran tactile à exécuter une ou plusieurs actions en exécutant les actes consistant à :
détecter la sélection d'au moins un élément parmi un ou plusieurs éléments affichés sur l'interface utilisateur du dispositif électronique (Étape 702), dans lequel l'au moins un élément est sélectionné en touchant l'au moins un élément pendant un temps prédéterminé dans la plage d'environ 1 milliseconde à environ 30 millisecondes ;
fournir une boîte contextuelle incluant un ou plusieurs utilitaires basés sur le contexte associés à l'au moins un élément sélectionné sur l'interface utilisateur, dans lequel les utilitaires basés sur le contexte sont basés sur un type de l'au moins un élément sélectionné (Étape 704), dans lequel l'interface utilisateur (204) affiche les un ou plusieurs utilitaires basés sur le contexte adjacents à l'au moins un élément sélectionné et dans lequel les un ou plusieurs utilitaires basés sur le contexte apparaissent lorsque l'utilisateur touche lesdits un ou plusieurs éléments pendant ledit temps prédéterminé ;
détecter le glisser de l'au moins un élément sélectionné vers un utilitaire parmi les un ou plusieurs utilitaires basés sur le contexte dans la boîte contextuelle, dans lequel chacun des un ou plusieurs utilitaires basés sur le contexte correspond à une action préconfigurée (Étape 706) ; et
détecter le déposer de l'au moins un élément sélectionné sur les un ou plusieurs utilitaires basés sur le contexte (Étape 708) ; et
exécuter une action préconfigurée correspondant audit utilitaire parmi les un ou plusieurs utilitaires basés sur le contexte (Étape 710),
dans lequel les uns ou plusieurs éléments sont sélectionnés parmi un groupe comprenant des courriers électroniques, e-mails, (304) et des services de minimessages, SMS.
